# FASCICULE DE BREVET EUROPEEN

(11) **EP 0 504 033 B1**
(45) Date de publication et mention de la délivrance du brevet: **02.11.1994**
(21) Numéro de dépôt: 92400611.7
(22) Date de dépôt: 10.03.1992
(51) Int. Cl.: F16D 13/64

(54) **Disque de friction pour embrayage à frottement à sec**
Reibungsscheibe für Trockenkupplung
Friction disc for a dry clutch

(30) Priorité: 12.03.1991 FR 9102966
(43) Date de publication de la demande: 16.09.1992
(73) Titulaire: VALEO, 75848 Paris Cédex 17 (FR)
(72) Inventeur: Henrion, Philippe, F-87280 Limoges (FR)
(74) Mandataire: Lemaire, Marc

(56) Documents cités:
- EP-A- 0 010 698
- EP-A- 0 063 785
- DE-A- 2 619 536
- FR-A- 2 255 499
- US-A- 3 961 829

## Description

L'invention concerne un disque de friction pour embrayage à frottement à sec.

Un tel disque est, généralement, formé d'un voile métallique comprenant des parties déformables axialement, qui forment un dispositif de progressivité, sur lesquelles sont rapportées, de part et d'autre, deux garnitures de friction en forme de couronnes.

Le rôle du dispositif de progressivité est, d'une part, de permettre la transmission progressive et sans à-coup du couple moteur lors d'une opération d'embrayage et, d'autre part, de compenser des défauts géométriques des surfaces de l'embrayage.

La fixation des garnitures de friction sur ledit voile est, de manière usuelle, réalisée par rivetage.

Il en résulte que l'épaisseur utile de chaque garniture est limitée à sa portion qui se trouve au-dessus des têtes de rivets de fixation.

De ce fait, le disque de friction est inutilement alourdi et son inertie en est augmentée. Ceci entraîne des difficultés à réaliser un synchronisme lors des opérations de débrayage et de changement de rapport de vitesse.

Afin de supprimer la fixation des garnitures par rivetage, on a déjà proposé de coller lesdites garnitures sur des plaquettes métalliques planes, avec interposition, en des zones discrètes, de bras élastiques réalisés en matériau élastomère.

Une telle construction est par exemple décrite dans les brevets US-A-2,253,316 et FR-B-2 450 977.

Dans un autre type de construction, décrit dans le document EP-A-0252583, les garnitures de friction sont fixées sur un voile métallique plan, par l'intermédiaire de bourrelets circulaires concentriques réalisés en matériau élastomère.

Ces solutions connues utilisant des bras ou cordons en matériau élastomère présentent cependant l'inconvénient d'une répartition non homogène de l'élastomère qui entraîne un défaut dans l'uniformité de la déformation du dispositif de progressivité au niveau des garnitures de friction, ainsi qu'une usure prématurée de celles-ci en raison de la concentration de l'échauffement qui se produit, en service, en des zones d'étendue limitée.

En effet, un matériau élastomère comme celui utilisé dans l'état de la technique précité se déforme par fluage, à condition de disposer, en toutes zones, d'un espace suffisant pour ce faire, ce qui n'est en général pas le cas dans les disques de friction connus.

La présente invention a pour objet de réaliser un disque de friction d'embrayage qui ne présente pas les inconvénients ci-dessus.

Un disque de friction d'embrayage à sec, comportant deux garnitures de friction en forme de couronnes est, selon l'invention, caractérisé par une couronne réalisée en matériau cellulaire, insérée entre lesdites garnitures qui présente des dimensions radiales sensiblement identiques à celles des garnitures de friction et qui présente une porosité comprise entre 10 et 75% pour une épaisseur au plus égale à 1,5 mm et entre 10 et 90% pour une épaisseur supérieure à 1,5 mm.

Selon l'invention, ledit matériau cellulaire est un matériau déformable possédant des cellules ou alvéoles ouverts et/ou fermés qui permettent, sous l'effet de contraintes de compression, de provoquer la diminution d'épaisseur du matériau, et, lorsque cessent de telles contraintes, de provoquer un retour à l'épaisseur d'origine.

Plus particulièrement, et selon l'invention, ledit matériau cellulaire est formé à partir des matériaux appartenant au groupe comprenant les mousses d'élastomères, telles que mousses de silicone, mousses de caoutchoucs fluorés, les matières thermoplastiques moulées avec insuflation de gaz pour créer une porosité, telles que les polyamides, les polyéther-cétones, les mousses de résines thermodurcissables possédant une souplesse suffisante telles que les résines epoxy modifiées.

Selon une première forme de réalisation de l'invention, ladite couronne en matériau cellulaire est placée entre une garniture et un support métallique ou voile.

En variante, entre chaque garniture et un support métallique ou voile est placée une telle couronne en matériau cellulaire.

Selon une autre forme de réalisation de l'invention, ladite couronne en matériau cellulaire est disposée entre deux supports métalliques ou voiles, solidaires entre eux, sur chacun desquels est rapportée, notamment par collage, une garniture de frottement.

Selon une disposition avantageuse de l'invention, ladite couronne en matériau cellulaire est collée, de part et d'autre, sur les éléments, voile ou garniture, avec lesquels elle est en contact.

L'invention permet d'obtenir un disque de friction pour embrayage à frottement à sec, qui présente des caractéristiques de déformabilité ajustables dans de grandes proportions.

En effet, et selon un autre aspect de l'invention, il est possible en dosant la proportion d'alvéoles à cellules ouvertes par rapport aux alvéoles à cellules fermées, de faire varier les caractéristiques de compressibilité et, par conséquent, de progressivité, dudit disque de friction.

En permettant un contact continu sur un support plan, les garnitures peuvent être fixées sur ledit disque par collage.

Il en résulte que l'épaisseur utile desdites garnitures, c'est-à-dire celle qui peut être usée en fonctionnement, est pratiquement constituée par l'épaisseur elle-même de la garniture.

De ce fait, il est possible, grâce à l'invention, d'utiliser des garnitures dont l'épaisseur est limitée vis-à-vis d'une garniture qui serait fixée par rivets, pour une même épaisseur d'usure possible.

En réduisant l'épaisseur des garnitures de frottement, on diminue la masse du disque de friction et, par conséquent, son inertie.

Cela améliore sensiblement les conditions de fonctionnement de la chaîne de transmission qu'équipe l'embrayage.

L'invention permet également d'améliorer les caractéristiques de déformabilité d'un disque de friction d'embrayage à sec.

Le matériau cellulaire utilisé selon l'invention, permet une auto-adaptation, quasiment point par point, aux différences locales de serrage du disque de friction d'embrayage entre un plateau de pression et un plateau de réaction.

Les garnitures de frottement peuvent ainsi plus facilement s'adapter et compenser les irrégularités de planéité de tels plateaux de pression et de réaction, en particulier lorsque ceux-ci sont amenés à se déformer sous l'effet, notamment, d'un échauffement.

Il en résulte que la surface utile de contact des garnitures avec lesdits plateaux de pression et de réaction est pratiquement identique à la surface totale desdites garnitures, ce qui permet une répartition homogène de l'usure des garnitures et, ainsi, d'améliorer la longévité de celles-ci.

Il en résulte également une répartition homogène de l'échauffement des garnitures en service, sans apparition de point chaud localisé. En considérant que l'usure d'un matériau de friction s'accélère considérablement dès que la température du matériau dépasse une certaine valeur, on comprend qu'en permettant d'éviter les points chauds et en répartissant au mieux le frottement, l'invention permet une diminution de la température de la garniture en tout point, et par conséquent amène une prolongation de la durée de service des garnitures.

D'autres caractéristiques et avantages de l'invention apparaîtront à la lecture de la description d'exemples de réalisation de l'invention, en regard des dessins annexés dans lesquels :
- la figure 1 représente, en coupe, un sous-ensemble de disque de friction d'embrayage selon un premier exemple de réalisation de l'invention;
- la figure 2 représente, en coupe, un sous-ensemble de disque de friction d'embrayage selon un second exemple de réalisation de l'invention, et
- la figure 3 représente, en coupe, un sous-ensemble de disque de friction d'embrayage selon un troisième exemple de réalisation de l'invention, en cours d'élaboration dans un moule.

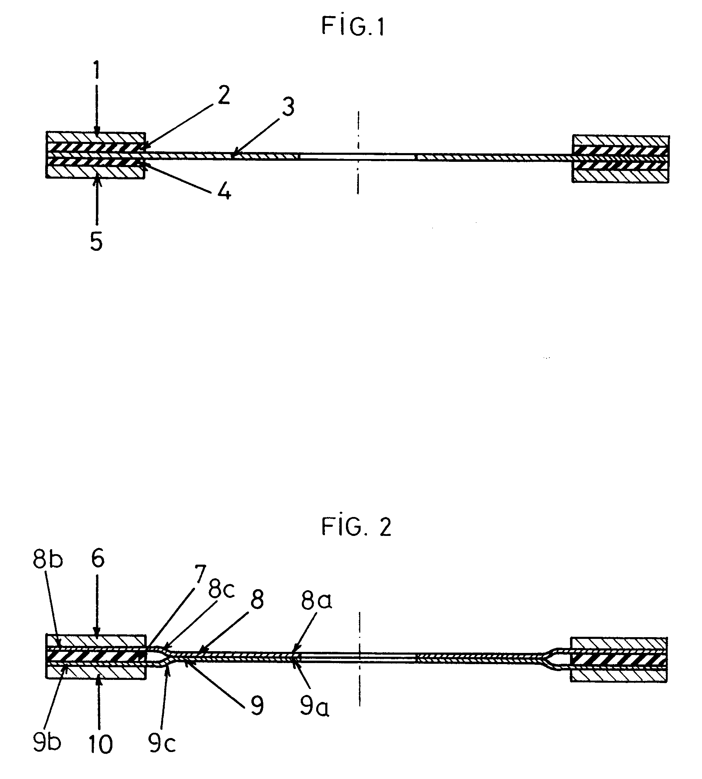

Le sous-ensemble de disque de friction d'embrayage représenté sur la figure 1, comprend un voile métallique 3 formant support pour un ensemble de deux garnitures de frottement 1 et 5, en forme de couronnes, rapportées de part et d'autre dudit voile 3.

Selon l'invention, chaque garniture de frottement 1 et 5 est solidarisée audit voile 3 avec interposition d'une couronne en matériau cellulaire 2,4 adhérisée par tout moyen approprié audit voile 3, d'une part, et à la garniture correspondante 1,5, d'autre part.

Un tel sous-ensemble est destiné à être associé avec un moyeu intérieurement cannelé, destiné à venir en prise sur un arbre cannelé, en pratique un arbre d'entrée de boîte de vitesses de véhicule automobile. L'association dudit sous-ensemble audit moyeu pouvant se faire par l'intermédiaire du voile métallique 3, soit directement comme décrit par exemple dans le brevet FR-849.990, soit par l'intermédiaire d'un dispositif amortisseur de torsion comprenant des moyens élastiques interposés en rotation entre ledit voile 3 et un ou plusieurs contre-voiles solidaires du moyeu, comme décrit par exemple dans le document FR-A-2.624.237.

On renvoit, pour plus de détails, à la description figurant dans les documents précités.

Ces dispositions bien connues ne seront pas décrites ci-après.

En variante, non représentée, l'une des garnitures de frottement est directement adhérisée sur ledit voile métallique 3, alors que, conformément à l'invention, une couronne en matériau cellulaire est interposée entre l'autre garniture et ledit voile.

La réalisation du sous-ensemble décrit ci-dessus en référence à la figure 1 est effectuée à partir des composants ci-après.

Les garnitures de frottement 1,5 se présentent sous la forme de couronnes de diamètre extérieur de 200 mm et de diamètre intérieur de 137 mm ; leur épaisseur est de 1,6 mm.

Elles sont réalisées en matériau commercialisé sous la référence F202 par la société VALEO.

Le voile 3 se présente sous la forme d'un disque de diamètre de 200 mm et d'épaisseur de 0,6 mm, en acier XC70.

Les couronnes en matériau cellulaire 2,4 présentent un diamètre extérieur de 200 mm et un diamètre intérieur de 137 mm avec une épaisseur de 2 mm.

Elles sont réalisées en mousses de silicone commercialisées sous la référence RTF 762 par la société GENERAL ELECTRIC.

Leur taux de porosité est avantageusement compris entre 10 et 90%.

Le taux de cellules ou alvéoles fermés de cette mousse est d'environ 60% du total des alvéoles.

L'élaboration du sous-ensemble précédent comporte les étapes décrites ci-après.

Il est tout d'abord procédé à un nettoyage du voile 3 par abrasion puis dégraissage à l'aide d'un solvant chloré tel que le trichloréthylène.

Un primaire d'accrochage pour silicone, tel que commercialisé sous la référence A 4094 par la société RHONE-POULENC est appliqué, à l'aide d'un rouleau en feutre, sur le voile 3 ainsi que sur chacune des faces des garnitures de frottement 1,5 destinées à venir en contact avec les couronnes de matériau cellulaire 2,4.

Après séchage du primaire d'accrochage pendant une durée d'environ 30 minutes, les différentes faces ayant reçu ledit primaire d'accrochage, sont enduites d'un adhésif du type silicone tel que celui commercialisé sous la référence CAF4 par la société RHONE POULENC.

L'assemblage final du sous-ensemble se fait ensuite de la manière suivante.

A l'intérieur d'un cylindre dont le diamètre intérieur correspond au diamètre extérieur des différents éléments du sous-ensemble, sont disposés successivement une première garniture 5, une couronne en matériau cellulaire 4, le voile 3, une seconde couronne en matériau cellulaire 2, une seconde garniture de frottement 1.

Le cylindre est ensuite fermé au moyen d'un piston sur lequel est appliquée une pression de 1 bar à la température ambiante pendant une durée correspondant à la réticulation de l'adhésif.

On a pu déterminer que le sous-ensemble obtenu ainsi possède une déformabilité de 0,8 mm sous une charge de 3500 N correspondant au tarage d'un mécanisme d'embrayage.

On a également déterminé que l'inertie, par rapport à une réalisation standard où les garnitures sont fixées à l'aide de rivets sur des supports métalliques ondulés, est réduite de 20%.

Des tests de frottement et d'usure sur bancs d'essais et sur véhicules ont en outre montré une amélioration par rapport à un disque de friction standard.

Le sous-ensemble représenté sur la figure 2, est formé de deux voiles métalliques adjacents 8,9, sur une face externe de chacun desquels est solidarisée par adhérisation une garniture de frottement 6,10 en forme de couronnes.

Au moins un voile 8 ou 9, et de préférence, comme représenté, chacun des voiles 8,9 présente une partie centrale plane 8a,9a et une partie périphérique plane 8b,9b sur lesquelles sont fixées les garnitures 6,10.

La partie périphérique 8b,9b de chacun des voiles 8,9 est axialement décalée par rapport à la partie centrale correspondante 8a,9a à la faveur d'un décrochement respectivement 8c,9c.

Les voiles 8a et 9a sont placés de telle manière que leur partie centrale 8a,9a soit en contact et que les décrochements 8c et 9c soient placés en opposition, en sorte que les parties périphériques 8b et 9b se trouvent écartées en ménageant entre elles un espacement en forme de couronnes.

Selon l'invention, ledit espacement en forme de couronnes est rempli d'un matériau cellulaire 7 conformé en couronnes et adhérisé au moins partiellement à au moins un des voiles 8,9, sur la partie périphérique 8b,9b desdits voiles, sur une face opposée à celle sur laquelle est fixée une garniture respectivement 6,10.

Dans cet exemple de réalisation, la dimension radiale de la couronne en matériau cellulaire 7 est identique à la dimension radiale correspondante des garnitures de frottement 6,10, et une portion radialement interne de l'espace compris entre lesdites parties périphériques 8b,9b des voiles 8,9 est prévue vide de matériau cellulaire 7.

Comme dans le cas de la figure 1, les garnitures de frottement 6,10 se trouvent au droit de la couronne en matériau cellulaire 7.

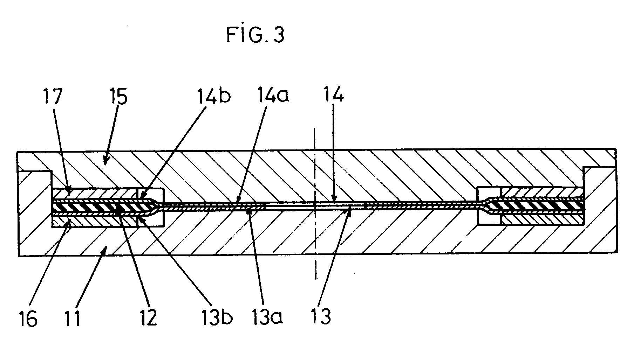

En variante, et comme représenté sur la figure 3, où le sous-ensemble présente la même forme que sur la figure 2, le matériau cellulaire en forme de couronne 12 remplit tout l'espace ménagé entre lesdites parties périphériques 13b,14b des voiles métalliques 13 et 14, en sorte que la couronne de matériau cellulaire 12 occupe, au droit des garnitures de frottement en forme de couronnes 16,17, une étendue radiale plus importante que celles-ci.

On notera que selon les exemples de réalisation des figures 2 et 3, le couple est transmis lors d'une manoeuvre de l'embrayage, directement d'une garniture au voile adjacent, ce qui évite toute sollicitation en cisaillement de ladite couronne en matériau cellulaire.

Les éléments composant le sous-ensemble décrit en référence à la figure 2, présentent les caractéristiques décrites ci-après.

Les garnitures de frottement 6,10 se présentent chacune sous la forme d'une couronne dont le diamètre extérieur est de 200 mm et le diamètre intérieur de 137 mm, avec une épaisseur de 1,6 mm.

Elles sont réalisées avec un matériau commercialisé sous la référence F202 par la société VALEO.

Les voiles 8 et 9 sont chacun réalisés en acier du type XC70, et présentent une épaisseur de 0,3 mm et un diamètre extérieur de 200 mm.

Le matériau cellulaire 7 se présente sous la forme d'une couronne dont le diamètre extérieur est de 200 mm et le diamètre intérieur de 127 mm, avec une épaisseur de 4 mm.

Cette couronne de matériau cellulaire est formée de 20 g de mousse de type silicone telle que la mousse commercialisée sous la référence RTV 1525 par la société RHONE-POULENC.

Le taux de porosité est avantageusement compris entre 10 et 90%.

Les éléments du sous-ensemble montré à la figure 3, présentent les mêmes caractéristiques et dimensions, sauf en ce qui concerne le diamètre intérieur de la couronne en matériau cellulaire 12 qui est de 115 mm, pour correspondre au diamètre sur lequel se trouvent des décrochements 13c et 14c desdits voiles 13,14.

L'élaboration du sous-ensemble à partir des éléments ci-dessus est réalisée comme indiqué ci-après.

Il est tout d'abord procédé à un décapage chimique, par exemple à l'aide d'acide chlorhydrique, des voiles 8 et 9 ou 13,14, puis à une passivation à la soude suivie d'un séchage.

Les garnitures 6,10 ou 16,17 sont ensuite enduites d'une colle à base de résine phénolique.

Les garnitures de frottement 6,10 ou 16,17 sont ensuite collées sur leur voile respectif formant support 8,9 ou 13,14, par pressage à chaud à une température de l'ordre de 180°C.

Les faces des voiles 8,9 ou 13,14 opposées à celles sur lesquelles ont été collées les garnitures de frottement, sont abrasées à l'aide d'un disque émeri puis nettoyées avec un solvant chloré comme du trichloréthylène, avant d'être enduites d'un primaire d'accrochage pour silicone, tel que commercialisé sous la référence A4094 par la société RHONE-POULENC. Il est ensuite procédé à un séchage pendant une trentaine de minutes.

A l'aide d'une machine appropriée, il est formé un jonc circulaire avec une quantité dosée à 20 g d'une composition à base de silicone contenant des agents moussants, commercialisée sous la référence RTV 1525 par la société RHONE-POULENC sur le primaire d'accrochage d'un des voiles 8,9 ou 13,14. La quantité d'agents moussants est déterminée pour que, selon l'invention, une porosité comprise entre 10 et 75% soit obtenue pour une épaisseur de mousse de silicone au plus égale à 1,5 mm et entre 10 et 90% pour une épaisseur supérieure à 1,5 mm. Ce dernier est ensuite disposé dans un moule 11 (figure 3) de telle sorte que la garniture se trouve placée au fond du moule et le cordon déposé précédemment disposé sur le dessus. Un autre voile 9,8 ou 14,13 est ensuite placé au-dessus du précédent de telle sorte que le primaire d'accrochage déposé précédemment vienne au contact dudit cordon, et que la garniture correspondante soit disposée au-dessus du moule. Le moule est ensuite fermé à l'aide d'un piston 15 puis disposé dans un four tunnel de manière à être porté à une température de 180°C pendant une durée suffisante pour permettre le moussage du matériau silicone et sa réticulation.

Pendant cette phase la mousse se développe et remplit l'espacement en forme de couronnes tout en adhérant aux parties périphériques 8b,9b ou 13b,14b des voiles 8,9 ou 13,14.

A l'aide du moule 11 et du piston 15, l'écartement final des voiles 13,14 peut être contrôlé.

On obtient ainsi un sous-ensemble de disques de friction d'embrayages qui présente une inertie réduite de 25% par rapport à une solution standard à pales cambrées et garnitures rivetées.

On a pu mesurer que la progressivité de la friction est de 0,9 mm sous une charge de 3500 N correspondant au tarage d'un mécanisme d'embrayage.

Des résultats d'essais effectués aux bancs et sur véhicules montrent des niveaux de frottement équivalents ou même supérieurs à des solutions standard utilisant les mêmes garnitures de friction; on constate en outre que l'usure des garnitures s'effectue de manière plus régulière que dans les solutions standard. En particulier on a pu constater qu'à conditions égales, la différence d'épaisseur d'usure entre diamètre intérieur et diamètre extérieur de chacune des garnitures était inférieure à 0,05 mm avec le sous-ensemble selon l'invention, alors qu'avec des sous-ensembles à pales progressives et garnitures rivetées l'écart d'usure d'un diamètre à l'autre pouvait atteindre des valeurs comprises entre 0,08 mm et 0,1 mm.

En variante, la couronne en matériau cellulaire 7 de la figure 2 peut être préalablement réalisée, comme décrit au sujet du mode de réalisation de la figure 1, puis adhérisée aux voiles 8,9 de la même manière que cette dernière.

Dans un autre type de variante de réalisation du sous-ensemble décrit aux figures 2 et 3, deux voiles métalliques plans sont utilisés, maintenus écartés l'un de l'autre au moyen d'un anneau qui peut être ôté après insertion ou moulage du matériau cellulaire.

En variante non représentée, la couronne en matériau cellulaire 2 et/ou 4; 7; 12 est constituée d'un ensemble de sous-couches élémentaires empilées et avantageusement solidarisées entre elles.

Comme indiqué ci-dessus, il est possible, lors de la réalisation du matériau cellulaire, en dosant et en ajustant la proportion globale d'alvéoles, ainsi que les proportions relatives d'alvéoles fermés et d'alvéoles ouverts, d'ajuster les caractéristiques de déformabilité du disque de friction équipé d'un tel sous-ensemble.

De même, les cellules ou alvéoles, fermés ou ouverts, peuvent présenter des formes diverses telles que, notamment, sphéroïdales, tubulaires.

Ceci constitue encore un avantage considérable par rapport aux dispositions connues à pales élastiques ou à bras ou cordons en matériau élastomère.

On peut, avantageusement, obtenir la fixation d'une couronne en matériau cellulaire par simple adhérisation sur un voile et/ou sur une garniture de frottement, lors de l'élaboration du matériau cellulaire, en particulier lors d'une phase de réticulation de ce dernier.

En outre, grâce aux matériaux cellulaires choisis, qui présentent des caractéristiques d'amortissement, on peut obtenir qu'au desserrage un disque de friction ne reprenne pas immédiatement son épaisseur initiale, ce qui est favorable pour l'obtention d'un débrayage franc.

Les différents voiles métalliques 3; 8,9; 13,14 peuvent avantageusement présenter des découpes destinées à les allèger, à augmenter leur flexibilité ou éviter des contraintes et déformations dues à un éventuel échauffement en service.

## Revendications

1. Disque de friction d'embrayage à sec, comportant deux garnitures de friction (1,5; 6,10; 16,17) en forme de couronnes, caractérisé par une couronne réalisée en matériau cellulaire (2,4; 7; 12), insérée entre lesdites garnitures (1,5; 6,10; 16,17) qui présente des dimensions radiales sensiblement identiques à celles des garnitures de friction et qui présente une porosité comprise entre 10 et 75% pour une épaisseur au plus égale à 1,5 mm et entre 10 et 90% pour une épaisseur supérieure à 1,5 mm.

2. Disque de friction selon la revendication 1, caractérisé en ce que ledit matériau cellulaire est un matériau déformable possédant des cellules ou alvéoles ouverts et/ou fermés qui permettent, sous l'effet de contraintes de compression, de provoquer la diminution d'épaisseur du matériau, et, lorsque cessent de telles contraintes, de provoquer un retour à l'épaisseur d'origine.

3. Disque de friction selon la revendication 2, caractérisé en ce que ledit matériau cellulaire est formé à partir des matériaux appartenant au groupe comprenant les mousses d'élastomères, telles que mousses de silicone, mousses de caoutchoucs fluorés, les matières thermoplastiques moulées avec insuflation de gaz pour créer une porosité, telles que les polyamides, les polyéther-cétones, les mousses de résines thermodurcissables possédant une souplesse suffisante telles que les résines epoxy modifiées.

4. Disque de friction selon l'une quelconque des revendications précédentes, caractérisé en ce que ladite couronne en matériau cellulaire (2,4) est placée entre une garnitures (1,5) et un support métallique ou voile (3).

5. Disque de friction selon la revendication 4, caractérisé en ce que entre chaque garniture (1,5) et voile (3) est placée une telle couronne en matériau cellulaire (2,4).

6. Disque de friction selon l'une quelconque des revendications 1 à 3, caractérisé en ce que ladite couronne en matériau cellulaire (7,12) est disposée entre deux supports métalliques ou voiles (8,9; 13,14) solidaires entre eux, sur chacun desquels est rapportée, notamment par collage, une garniture de frottement (6,10; 16,17).

7. Disque de friction selon l'une quelconque des revendications 4 à 6, caractérisé en ce que ladite couronne en matériau cellulaire (2,4; 7; 12) est collée, de part et d'autre, sur les éléments, voile (3; 8,9; 13,14) ou garniture (1,5; 6,10; 16,17; 3; 8,9; 13,14), avec lesquels elle est en contact.

8. Disque de friction selon l'une des revendications 6 ou 7, caractérisé en ce que chaque support métallique ou voile (8,9; 13,14) présente une partie centrale plane (8a,9a; 13a,14a) et une partie périphérique plane (8b,9b; 13b,14b) sur lesquelles sont fixées lesdites garnitures (6,10; 16,17), et en ce que pour l'un au moins desdits voiles (8,9; 13,14) ladite partie périphérique (8b,9b; 13b,14b) est axialement décalée pour former entre les deux voiles (8,9; 13,14) accolés par leurs parties centrales (8a,9a; 13a,14a) un espacement en forme de couronne à l'intérieur duquel est disposée ladite couronne en matériau cellulaire (7; 12).

9. Disque de friction selon l'une quelconque des revendications précédentes, caractérisé en ce que ladite couronne en matériau cellulaire (2,4; 7) présente une dimension radiale identique à celle d'une garniture de frottement (1,5; 6,10; 16,17) et se trouve disposée au droit d'une telle garniture de frottement (1,5; 6,10; 16,17).

10. Disque de friction selon l'une quelconque des revendications 1 à 8, caractérisé en ce que ladite couronne en matériau cellulaire (12) occupe une dimension radiale plus importante que celle des garnitures de frottement (16,17) en étant au droit de celles-ci.

## Claims

1. A dry friction clutch plate having two crown shaped friction pads (1, 5; 6, 10; 16, 17), characterised by a crown element, which is formed of a cellular material (2, 4; 7; 12) and is inserted between the said pads (1, 5; 6, 10; 16, 17), and which has radial dimensions substantially identical to those of the friction pads and a porosity in the range between 10 and 75% for a thickness at least equal to 1.5mm, and between 10 and 90% for a thickness greater than 1.5mm.

2. A friction plate according to Claim 1, characterised in that the said cellular material is a deformable material having pores or cavities which are open and/or closed, and which, under the effect of compressive stresses, cause the thickness of the material to be reduced, and when such stresses cease, cause it to revert to the original thickness.

3. A friction plate according to Claim 2, characterised in that the said cellular material is formed from materials belonging to the group which comprises elastomeric foams, such as silicone foams, fluorinated rubber foams, moulded thermoplastic materials with injection of gas to give porosity, such as polyamides, polyetherketones, thermosetting resin foams having sufficient softness, such as modified epoxy resins.

4. A friction plate according to any one of the preceding Claims, characterised in that the said crown element of cellular material (2, 4) is located between a pad (1, 5) and a metallic support or plate (3).

5. A friction plate according to Claim 4, characterised in that between each pad (1, 5) and plate (3) there is located such a crown element of cellular material (2, 4).

6. A friction plate according to any one of Claims 1 to 3, characterised in that the said crown element of cellular material (7, 12) is located between two metallic supports or plates (8, 9; 13, 14) which are secured together, and on each of which a friction pad (6, 10; 16, 17) is carried, in particular by adhesion.

7. A friction plate according to any one of Claims 4 to 6, characterised in that the said crown element of cellular material (2, 4; 7; 12) is adhesively secured, on either side, on the elements, i.e. plate (3; 8, 9; 13, 14) or pad (1, 5; 6, 10; 16, 17; 3; 8, 9; 13, 14), with which elements it is in contact.

8. A friction plate according to Claim 6 or Claim 7, characterised in that each metallic support or plate (8, 9; 13, 14) has a flat central portion (8a, 9a; 13a, 14a) and a flat peripheral portion (8b, 9b; 13b, 14b), on which the said pads (6, 10; 16, 17) are secured, and in that, for at least one of the said plates (8, 9; 13, 14), the said peripheral portion (8b, 9b; 13b, 14b) is axially offset so as to define between the two plates (8, 9; 13, 14), which are joined together through their central portions (8a, 9a; 13a, 14a), a crown-shaped space within which the said crown element of cellular material (7; 12) is disposed.

9. A friction plate according to any one of the preceding Claims, characterised in that the said crown element of cellular material (2, 4; 7) has a radial dimension which is identical to that of a friction pad (1, 5; 6, 10; 16, 17), and is disposed in line with a said friction pad (1, 5; 6, 10; 16, 17).

10. A friction plate according to any one of Claims 1 to 8, characterised in that the said crown element of cellular material (12) has a radial dimension which is larger than that of the friction pads (16, 17), being aligned with these latter.

## Patentansprüche

1. Reibungsscheibe für Trockenkupplungen mit zwei Reibbelägen (1,5; 6,10; 16,17), **dadurch gekennzeichnet,** daß zwischen den Reibbelägen (1,5; 6,10; 16,17) ein Kranz aus einem Werkstoff mit zelliger Struktur (2,4; 7; 12) eingesetzt ist, der radiale Abmessungen aufweist, die in etwa gleich denjenigen der Reibbeläge sind, und der eine Porosität zwischen 10 und 75% bei einer Dicke von höchstens 1,5 mm und zwischen 10 und 90% bei einer Dicke größer als 1,5 mm aufweist.

2. Reibungsscheibe nach Anspruch 1 , **dadurch gekennzeichnet,** daß es sich bei dem besagten Werkstoff mit zelliger Struktur um ein verformbares Material mit offenen und/oder geschlossenen Zellen oder Hohlräumen handelt, die unter der Einwirkung von Druckbeanspruchungen eine Verringerung der Dicke des Materials herbeiführen und beim Aufhören dieser Druckbeanspruchungen eine Rückkehr zu der ursprünglichen Dicke bewirken können.

3. Reibungsscheibe nach Anspruch 2 , **dadurch gekennzeichnet,** daß der Werkstoff mit zelliger Struktur aus Materialien hergestellt wird, die zu der Gruppe gehören, welche die Elastomerschaumstoffe umfaßt, wie etwa Siliconschaum, Fluorkautschukschaum, sowie Thermoplaste, die zur Schaffung eines Porenraums mit Gaseinblasung geformt werden, wie etwa Polyamide, Polyetherketone, und Duroplastschaumstoffe mit ausreichender Flexibilität wie etwa modifizierte Epoxidharze.

4. Reibungsscheibe nach einem der vorangehenden Ansprüche , **dadurch gekennzeichnet**, daß der Kranz aus einem Werkstoff mit zelliger Struktur (2, 4) zwischen einem Reibbelag (1, 5) und einem Metallträger bzw. einer Metallscheibe (3) eingesetzt wird.

5. Reibungsscheibe nach Anspruch 4 , **dadurch gekennzeichnet,** daß zwischen jedem Reibbelag (1, 5) und der Metallscheibe (3) ein derartiger Kranz aus einem Werkstoff mit zelliger Struktur (2, 4) eingesetzt wird.

6. Reibungsscheibe nach einem der Ansprüche 1 bis 3, **dadurch gekennzeichnet,** daß der Kranz aus einem Werkstoff mit zelliger Struktur (7, 12) zwischen zwei fest miteinander verbundenen Metallträgern oder Metallscheiben (8, 9; 13, 14) angeordnet ist, auf denen jeweils, insbesondere durch Verkleben, ein Reibbelag (6, 10; 16, 17) angebracht ist.

7. Reibungsscheibe nach einem der Ansprüche 4 bis 6, **dadurch gekennzeichnet,** daß der Kranz aus einem Werkstoff mit zelliger Struktur (2, 4; 7; 12) beidseitig auf den Elementen - Metallscheibe (3; 8, 9; 13, 14) oder Reibbelag (1, 5; 6, 10; 16, 17; 3; 8, 9; 13, 14) -, mit denen er in Berührung kommt, verklebt ist.

8. Reibungsscheibe nach einem der Ansprüche 6 oder 7, **dadurch gekennzeichnet,** daß jeder Metallträger bzw. jede Metallscheibe (8, 9; 13, 14) einen ebenen Mittelteil (8a, 9a; 13a, 14a) und einen ebenen Peripherieteil (8b, 9b; 13b, 14b) aufweist, auf denen die Reibbeläge (6, 10; 16, 17) befestigt sind und daß bei mindestens einer der Metallscheiben (8, 9; 13, 14) der Peripherieteil (8b, 9b; 13b, 14b) axial versetzt ist, um zwischen den beiden durch ihre Mittelteile (8a, 9a; 13a, 14a) aneinander angefügten Metallscheiben (8, 9; 13, 14) einen kranzförmigen Zwischenraum zu bilden, in dessen Innern der Kranz aus dem Werkstoff mit zelliger Struktur (7; 12) angeordnet ist.

9. Reibungsscheibe nach einem der vorangehenden Ansprüche , **dadurch gekennzeichnet,** daß der Kranz aus dem Werkstoff mit zelliger Struktur (2, 4; 7) eine radiale Abmessung gleich derjenigen eines Reibbelags (1, 5; 6, 10; 16, 17) aufweist und daß er in Entsprechung zu einem derartigen Reibbelag (1, 5; 6, 10; 16, 17) angeordnet ist.

10. Reibungsscheibe nach einem der Ansprüche 1 bis 8, **dadurch gekennzeichnet,** daß der Kranz aus dem Werkstoff mit zelliger Struktur (12) eine größere radiale Abmessung als die Reibbeläge (16, 17) besitzt, wobei er in Entsprechung zu diesen angeordnet ist.
